# EUROPÄISCHE PATENTSCHRIFT

(11) **EP 2 861 394 B1**
(45) Veröffentlichungstag und Bekanntmachung des Hinweises auf die Patenterteilung: **05.10.2016**
(21) Anmeldenummer: 13734326.5
(22) Anmeldetag: 13.06.2013
(51) Int. Cl.: B29B 9/06

(54) **VORRICHTUNG ZUM GRANULIEREN VON SCHMELZEMATERIAL**
DEVICE FOR GRANULATING MELT MATERIAL
DISPOSITIF DE GRANULATION DE MATÉRIAU EN FUSION

(30) Priorität: 15.06.2012 DE 102012012061
(43) Veröffentlichungstag der Anmeldung: 22.04.2015
(73) Patentinhaber: Maag Automatik GmbH, 63762 Großostheim (DE)
(72) Erfinder: MÜRB, Reinhardt-Karsten, 63743 Aschaffenburg (DE)
(74) Vertreter: Spranger, Stephan
(86) Internationale Anmeldenummer: PCT/EP2013/001752
(87) Internationale Veröffentlichungsnummer: WO 2013/185922

(56) Entgegenhaltungen:
- EP-A1- 0 124 505
- WO-A1-2010/075597
- DE-A1- 1 813 221
- DE-A1- 2 035 035
- DE-A1-102009 006 123
- US-A- 3 673 298
- US-A1- 2004 081 716

## Beschreibung

Die Erfindung betrifft eine Vorrichtung zum Granulieren von Schmelzematerial, z.B. aus einem Material oder Materialmix von pharmazeutischem Wirkstoff oder z.B. einem Kunststoffschmelzematerial, wie etwa einem Polymerschmelzematerial, zu Granulatkörnem, insbesondere z.B. zur Herstellung von pharmazeutischen Erzeugnissen aus einem entsprechenden Schmelzematerial, gemäß dem Oberbegriff des Anspruchs 1.

Schmelzematerial allgemein wird heute beispielsweise durch Granulierung be- und verarbeitet. Bei der Granulierung von Schmelzematerial, bisher insbesondere z.B. von Kunststoffen, kommen generell häufig Extruder oder Schmelzepumpen zum Einsatz. Diese Extruder oder Schmelzepumpen drücken geschmolzenes Kunststoffausgangsmaterial durch Düsen einer Lochplatte in ein Kühlmedium, z.B. Wasser. Dabei wird das aus den Öffnungen der Düsen austretende Material von einer Messeranordnung mit zumindest einem umlaufenden Messer dort abgetrennt, so dass Granulatkörner entstehen. Entsprechende Vorrichtungen, welche beispielsweise Verfahren zur Unterwassergranulierung ausführen, sind als Unterwassergranulierungsanlagen beispielsweise unter der Produktbezeichnung SPHERO® des Unternehmens Automatik Plastics Machinery GmbH bekannt.

Anlagen zur Durchführung des Heißabschlags in Luft als Kühlmedium gibt es auch schon sehr lange im Markt, da sie verhältnismäßig einfach zu konstruierende Maschinen zum Granulieren von strangextrudierten Thermoplasten darstellen. Dabei werden aus der Lochplatte austretende Schmelzestränge durch dichtest möglich an der Oberfläche rotierende Messer und durch die dem Strangmaterial innewohnende Trägheit in kleine Stücke zu Granulatkömem zerhackt. Durch die Messerrotation wird aus der Umgebung bzw. dem Inneren des Gehäuses Luft angesaugt, welche die Granulatkörner mehr oder weniger frei und zentrifugal vom Schnittort wegleitet. Die dabei auftretenden Probleme liegen in der schlechten Kühlung der Messer, die mit der Zeit überhitzen und verkleben können, sowie der Neigung zum allgemeinen Verkleben und Verstopfen solcher Anlagen insbesondere bei höheren Durchsätzen mit großen Stückzahlen von herzustellenden Granulatkörnern unter realen Produktionsbedingungen. Weiter neigen so hergestellte Granulatkörner, zumal wenn die Viskosität des Schmelzematerials relativ hoch ist, zu zylindrischen und irregulären Formen, wobei gerade bei pharmazeutischen Materialien in den Folgeanwendungen eher sehr viele kugelförmige Granulatkörner einheitlicher Größe benötigt werden.

Beim Granulieren nach dem Heißabschlagverfahren wird generell z.B. eine schmelzflüssige Polymermatrix durch eine Anordnung von eine oder mehreren Düsen gepresst, die in einer planen Oberfläche endet, welche von einer Messeranordnung aus einem oder mehreren Messern überstrichen wird. Der austretende Strang wird von dem einen oder den Messern in kleine Einheiten, so genannten Granulatkörner unterteilt, die jedes für sich zunächst noch schmelzflüssig sind. Im Weiteren werden die Granulatkörner durch Abkühlung unter die Erstarrungstemperatur der Polymermatrix gebracht, so dass sie sich verfestigen und dabei die der Schmelze eigene Klebrigkeit und Neigung zum Anhaften an einer Oberfläche oder untereinander verliert. Dem Stand der Technik zu Folge wird dabei weiter unterteilt in solche Verfahren und sie anwendende Maschinen, die als Kühlmedium Wasser oder eine ähnliche Flüssigkeit verwenden, so genannten Unterwasser-Heißabschlägen, und so genannten Trocken-Heißabschlägen, das sind solche, bei denen die Kühlung nach dem Schnitt zunächst unter Ausschluss eines flüssigen Mediums nur mit Gas (bevorzugt Luft) vorgenommen wird, oder einem Nebel, der aus einem Gemisch aus einem Gas und Flüssigkeitstropfen besteht. Letztere Gruppe wird weiter unterschieden nach der Art einer weiteren, prozesstechnisch gesehen stromabwärts angeordneten Kühlungsart, nämlich solchen Verfahren und Maschinen, bei denen die mehr oder weniger zylinder- bis kegelstumpfartigen Wand der Schneidkammer von einem Wasserfilm überströmt wird, in den die Granulatkörner hineinfallen und mit dem sie aus der Schneidvorrichtung heraus transportiert werden. Diese werden auch Wasserringpelletizer genannt.

Sollen jedoch Produkte granuliert werden, bei denen der Kontakt mit Wasser unerwünscht ist, so werden Granulatoren eingesetzt, bei denen die frisch geschnittenen, noch schmelzflüssigen Granulatkörner ausschließlich durch das Kühl- und Transportgas gekühlt werden. Es ist aber typisch für die dem Stand der Technik entsprechenden Maschinen, dass zum Einen die frisch geschnittenen Granulatkörnern durch die Fliehkraft der Messeranordnung radial nach außen beschleunigt werden, zum Anderen, dass der Kühlprozess relativ langsam verläuft und dadurch das Pellet einen relativ weiten Weg im freien Flug zurücklegen muss, bevor es mit einer Oberfläche in Kontakt kommen darf. Dadurch bauen solche Granulatoren auch bei geringen Durchsätzen bereits sehr groß. Die Größe und der im Verhältnis dazu geringe Kühlgasdurchsatz bringen mit sich, dass es zu internen Verwirbelungen kommt, wodurch ein Teil der Granulatkörnern zu früh mit den Gehäuse- und sonstigen Maschinenteilen in Kontakt gerät und dort kleben bleiben kann. Ferner wird als Kühlgas typischerweise Umgebungsluft angesaugt, die für sich bereits mit Staub und unerwünschten Substanzen beladen sein kann, und für welche eine Kontrolle der Eigenschaften Temperatur, Feuchtigkeitsgehalt und Staubfreiheit nur aufwändig, wenn überhaupt, möglich ist. Es wäre wünschenswert zur Erlangung eines möglichst störungsarmen Laufs einer Pelletieranlage, dass die Granulatkörner hinreichend schnell abkühlen, so dass sie bereits über eine erstarrte Oberfläche verfügen, bevor sie mit Gehäuse- oder Messerteilen oder mit anderen Granulatkörner in Kontakt geraten. Die Kühlgeschwindigkeit ist in erster Linie eine Funktion des Temperaturunterschieds und in zweiter Linie eine Funktion des schnellen Austauschs von Volumenelementen des Gases untereinander, was in der Fachwelt mit dem Turbulenzgrad bezeichnet wird. Als Kennzahl für den Turbulenzgrad kann die Reynoldszahl herangezogen werden. Dabei hängt die Kühlwirkung primär von den Eigenschaften der Polymerschmelze (speziell Temperatur, Wärmekapazität, Oberfläche, Wärmeleitfähigkeit, Partikelgröße, spezifische Oberfläche) und des Kühlgases selbst (speziell Temperatur, Wärmekapazität, Turbulenzgrad, Massenstromverhältnis Kühlgas/Polymer-Granulatkörner) ab. Die meisten dieser Faktoren sind entweder Materialkonstanten oder prozesstechnisch vorgegebene Parameter, so dass die Kühlwirkung nur durch wenige Möglichkeiten in ihrer Intensität beeinflusst werden kann. Letztlich muss der Wärmeinhalt der Polymergranulatkömer auf das Kühlgas übertragen werden. Unter Vernachlässigung des Wärmeaustauschs mit Gehäuse- und anderen Maschinenteilen gilt dabei, dass die Wärmeinhaltsdifferenz des Schmelzematerials gleich der Wärminhaltsdifferenz des Kühlgases ist.

Eine einfache Einstellbarkeit des Volumenstroms des Kühlfluids zu einer Schneidkammer einer Granulationsvorrichtung sowohl für die Zuführung von flüssigem wie auch von gasförmigem Kühlfluid, beispielsweise Wasser oder Prozessluft, wäre also wünschenswert.

Die deutsche Offenlegungsschrift DE 10 2009 006 123 A1 beschreibt zwar bereits ein Verfahren sowie eine Vorrichtung zum Granulieren von thermoplastischem Kunststoffmaterial, welche(s) strömungsoptimierte Zuströmdüsenanordnungen zur Schneidkammer eines Granulators zeigt, dort ist jedoch keine einfache Einstellbarkeit einer Schlitzbreite einer Ringdüsenanordnung beschrieben.

Es ist die Aufgabe der vorliegenden Erfindung, eine Vorrichtung zum Granulieren von Schmelzematerial vorzusehen, welche die Nachteile des Standes der Technik überwindet und insbesondere auf relativ konstruktiv einfache und kostengünstige Weise eine flexibel einsetzbare und effektive Granulierung mit einer Reduzierung der Verklebungsneigung von Granulatkörnern mit gleichmäßiger Korngröße und gleichmäßiger sowie gleichbleibender Formgebung ermöglicht.

Diese Aufgabe wird erfindungsgemäß gelöst mit einer Vorrichtung mit den Merkmalen gemäß Anspruch 1.

Die erfindungsgemäße Vorrichtung zur Herstellung von Granulatkömem aus einem Schmelzematerial weist eine Lochplatte mit darin angeordneten Düsen auf, aus welchen das Schmelzematerial austritt, wobei der Lochplatte eine Schneidanordnung mit einem Messerkopf mit zumindest einem Messer, und einer Messerwelle, angetrieben von einem Motor, gegenüberliegt, so dass das zumindest eine Messer die Düsen in der Lochplatte umlaufend überstreicht und dabei Granulatkörner des dort austretenden Schmelzematerials abtrennt, wobei die Vorrichtung eine Schneidkammer in einem Gehäuse aufweist, welche an die Lochplatte anschließt, zumindest das zumindest eine Messer der Schneidanordnung umgibt und von einem Kühlmedium, wie etwa Luft oder Wasser, durchströmt wird, welches aus einer Zuströmeinrichtung in die Schneidkammer eingeleitet wird, so dass dabei die Granulatkörner aus dem Schmelzematerial in dem Kühlmedium verfestigt werden, wobei die Zuströmeinrichtung eine separate Zuströmkammer, welche die Schneidkammer im Rotationsbereich des zumindest einen Messers umfänglich umgibt, und eine umfänglich um die Schneidkammer angeordnete Zuströmdüsenanordnung zwischen der Zuströmkammer und der Schneidkammer aufweist, so dass dort das Kühlmedium umfänglich von verschiedenen Seiten radial von außen nach innen oder im Wesentlichen radial von außen nach innen in die Schneidkammer einleitbar ist, wobei zumindest im Rotationsbereich eine zentripetale oder zumindest im Wesentlichen zentripetale Strömung des Kühlmediums ausgebildet wird und im Weiteren das Kühlmedium und die darin befindlichen Granulatkörner einem Auslass der Schneidkammer zugeführt werden. Erfindungsgemäß ist dabei die Zuströmdüsenanordnung als ringförmige, in ihrer Schlitzbreite verstellbare Schlitzdüse ausgebildet.

Mit der erfindungsgemäßen Anordnung ist es somit leicht möglich, den Volumenstrom des Kühl- und Transportmediums durch Einstellung der Schlitzbreite einer Schlitzdüse einzustellen, welcher dabei zweckmäßig so gewählt werden kann, dass die Granulatkörner sofort nach dem Schnitt vereinzelt werden, also im großen Überschuss.

Zweckmäßig ist zumindest die Schlitzdüse und/oder die Zuströmkammer mit einem wärmeisolierenden und/oder anti-haftendem Material ausgekleidet, bevorzugt aus Teflon® oder Emaille. Mit dieser Maßnahme wird das dort durchtretende Kühlmedium vor unerwünschter Erwärmung geschützt und ein Zusetzen der Schlitzdüse durch sich dort ansetzende Ablagerungen, z.B. auch von Schmelzematerial, wird zumindest verringert.

Die Erfindung wird im Folgenden beispielhaft anhand der beigefügten Figur sowie anhand der angegebenen Beispiele näher erläutert werden. Es zeigt:

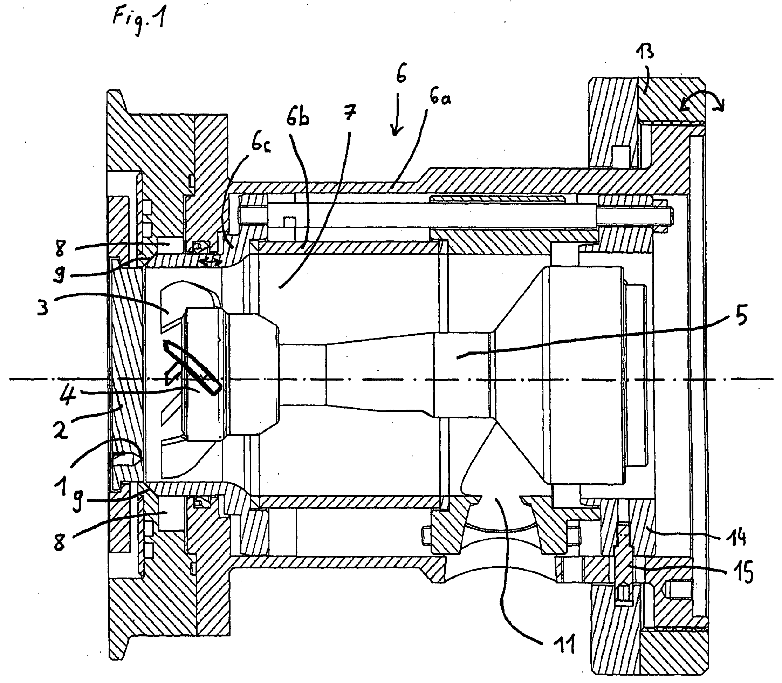

Fig. 1 in einer schematischen Längsschnittansicht eine Granulierungsvorrichtung gemäß einer Ausführungsform der Erfindung.

Die Fig. 1 zeigt schematisch in einer Längschnittansicht eine Vorrichtung zum Granulieren von aus Düsen 1 in einer Lochplatte 2 austretendem Schmelzematerial, z.B. einem pharmazeutischen Schmelzematerial.

Die in Fig. 1 schematisch gezeigte Granulierungsvorrichtung weist eine Lochplatte 2 mit darin vorgesehenen Düsen 1 auf, wobei die Anordnung der Düsen 1 im Wesentlichen rotationssymmetrisch ist und auch die sonstige Gestaltung der Vorrichtung rotationssymmetrisch bzw. im Wesentlichen rotationssymmetrisch ist. Gemäß der Darstellung der Fig. 1 ist der Lochplatte 2 eine Messeranordnung zugeordnet mit zumindest einem Messer 3, welches von einem Messerträger 4, angeordnet auf einer Messerwelle 5, gebildet ist. Die Messeranordnung wird von einem Motor (in Fig. 1 nicht gezeigt) angetrieben, so dass das zumindest eine Messer 3 die Düsen 1 in der Lochplatte 2 überstreicht und dabei Granulatkörner des aus den Düsen 2 austretenden z.B. pharmazeutischen Schmelzematerials abtrennt. Das Schmelzematerial kann auf herkömmliche Art und Weise geschmolzen werden und zum Beispiel über einen Extruder oder eine Schmelzepumpe (in Fig. 1 nicht gezeigt) zu dem Bereich der Lochplatte 2 transportiert werden und aus den Düsen 1 dort gedrückt werden. Die Vorrichtung weist eine Schneidkammer 7 in einem Gehäuse 6 mit einem Gehäuseaußenbereich 6a und einem Gehäuseinnenbereich 6b auf, welche an die Lochplatte 2 anschließt. Die Schneidkammer 7 wird im Betrieb erfindungsgemäß mit einem Kühlmedium, üblicherweise z.B. Luft oder Wasser, gefüllt und durchströmt, wobei die Schneidkammer 7 zumindest das eine Messer 3 und den Messerträger sowie zumindest einen Teil der Messerwelle 5 umgibt. Die Messerwelle 5 ist in dem Gehäuseteil, welches der Lochplatte 2 abgewandt ist, fluiddicht aus dem Gehäuse 6 herausgeführt, und der Motor (in Fig. 1 nicht gezeigt) ist vorgesehen, welcher über die Messerwelle 5 das zumindest eine Messer 3 zu einer Rotationsbewegung antreibt.

Es ist erfindungsgemäß eine Zuströmeinrichtung vorgesehen mit einer separaten Zuströmkammer 8, welche die Schneidkammer 7 im Bereich der Rotation des zumindest einen Messers 3 umfänglich umgibt, und mit einer umfänglich verlaufend angeordneten Zuströmdüsenanordnung 9 zwischen der Zuströmkammer 8 und der Schneidkammer 7, wobei die Zuströmdüsenanordnung 9 im in der Fig. 1 gezeigten Fall eine umfänglich umlaufende Ringspaltdüse mit einer über den Umfang gleichbleibenden und einstellbaren Düsenbreite von z.B. 3 mm ist. Die Zuströmkammer 8 weist erfindungsgemäß über deren Umfang, d.h. umfänglich, von einer Einlassöffnung 10 für das Kühlmedium in der Zuströmkammer 8 beginnend in Rotationsrichtung des zumindest einen Messers 3 einen abnehmenden Querschnitt auf.

Gemäß der in Fig. 1 gezeigten Gestaltung strömt durch die Zuströmdüsenanordnung 9 eine umfänglich gleichmäßige Durchsatzmenge an Kühlmedium, wobei erfindungsgemäß dort die Zuströmdüsenanordnung 9 als Drosseleinrichtung ausgebildet sein kann, bei deren Durchtritt das Kühlmedium sich adiabatisch entspannt und somit abkühlt. Ferner wird erfindungsgemäß durch die ringförmige Ausgestaltung der Zuströmdüsenanordnung 9 zwischen der Zuströmkammer 8 und der Schneidkammer 7, wie diese in der Fig. 1 dargestellt ist, das Kühlmedium umfänglich von allen Seiten radial von außen nach innen oder im Wesentlichen radial von außen nach innen in die Schneidkammer 7 eingeleitet. Dabei ergibt sich zumindest im Rotationsbereich des zumindest einen Messers 3 eine zentripetale oder zumindest im Wesentlichen zentripetale Strömung des Kühlmediums. Die Zuströmdüsenanordnung 9 ist dabei als ringförmige Schlitzdüse mit verstellbarer Schlitzbreite so gestaltet, dass in Umfangsrichtung immer eine Möglichkeit gegeben ist, dass das Kühlmedium aus allen Bereichen der umlaufenden Zuströmkammer 8 strömen kann. Die Verstellbarkeit der Schlitzbreite der Zuströmdüsenanordnung 9 ergibt sich gemäß der Darstellung der Fig. 1 durch eine mögliche Verschiebung des die Schneidkammer 7 zumindest im Rotationsbereich des zumindest einen Messers 3 dort umschließenden Wandelements 6c mit einer ersten, der Lochplatte 2 abgewandten Düsenfläche, welches in axialer Richtung der gesamten Anordnung (Doppelpfeil in Fig. 1) über die damit verbunden inneren Gehäuseteile 6b, einem Innenring 14 und einen damit sowie mit einer verdrehbaren Nonius-Schraube 13 (Doppelpfeil in Fig. 1) gegen das äußere Gehäuseteil 6a und somit auch gegen die auf Seite der Lochplatte 2 vorhandene Düsenfläche der Zuströmdüsenanordnung 9 verschiebbar ist. An Stelle der in Fig. 1 gezeigten Anordnung mit Nonius-Schraube 13 kann eine axiale Verstellung der Schlitzbreite der Zuströmdüsenanordnung 9 auch über eine Kulissenführung im Gehäuse 6 realisiert werden (in Fig. 1 nicht gezeigt). Über die einstellbare Schlitzbreite kann die Geometrie der Zuströmdüsenanordnung so gewählt werden, dass diese beispielsweise als Drosselanordnung für das dort hindurch in die Schneidkammer 7 eintretende Kühlfluid dienen kann, welches sich bei geeigneter Schlitzbreite dort hindurch tretend adiabatisch entspannt und sich so abkühlt.

Gemäß der Darstellung der Fig. 1 ist ein Auslass 11 in dem der Zuströmeinrichtung abgewandten Bereich der Schneidkammer 7 angeordnet. Nach dem Rotationsbereich strömt das Kühlmedium mit den darin sich befindenden Granulatkörnern weiter dem Bereich des Auslasses 11 der Schneidkammer 7 zu, in welchem sie beispielsweise bevorzugt in einem Winkel von weniger als 10° gegen eine dortige Wandung der Schneidkammer 7 geführt werden, so dass den sich in dem Kühlmedium befindlichen Granulatkörnern aus dem Schmelzematerial dort eine rollende Bewegung aufgeprägt wird.

Die in Fig. 1 gezeigte Vorrichtung dient z.B. in der Anwendung für die Herstellung von pharmazeutischen Erzeugnissen bzw. Granulatkörnern aus einem entsprechenden Schmelzematerial.

## Patentansprüche

1. Vorrichtung zur Herstellung von Granulatkömem aus einem Schmelzematerial, mit einer Lochplatte (2) mit darin angeordneten Düsen (1), aus welchen das Schmelzematerial austritt, wobei der Lochplatte (2) eine Schneidanordnung mit einem Messerkopf mit zumindest einem Messer (3), und einer Messerwelle (5), angetrieben von einem Motor, gegenüberliegt, so dass das zumindest eine Messer (3) die Düsen (1) in der Lochplatte (2) umlaufend überstreicht und dabei Granulatkörner des dort austretenden Schmelzematerials abtrennt, wobei die Vorrichtung eine Schneidkammer (7) in einem Gehäuse (6, 6a, 6b) aufweist, welche an die Lochplatte (2) anschließt, zumindest das zumindest eine Messer (3) der Schneidanordnung umgibt und von einem Kühlmedium durchströmt wird, welches aus einer Zuströmeinrichtung (8,9) in die Schneidkammer (7) eingeleitet wird, so dass dabei die Granulatkörner aus dem Schmelzematerial in dem Kühlmedium verfestigt werden, wobei die Zuströmeinrichtung eine separate Zuströmkammer (8), welche die Schneidkammer (7) im Rotationsbereich des zumindest einen Messers (3) umfänglich umgibt, und eine umfänglich um die Schneidkammer (7) angeordnete Zuströmdüsenanordnung (9) zwischen der Zuströmkammer (8) und der Schneidkammer (7) aufweist, so dass dort das Kühlmedium umfänglich von verschiedenen Seiten radial von außen nach innen oder im Wesentlichen radial von außen nach innen in die Schneidkammer (7) einleitbar ist, wobei zumindest im Rotationsbereich eine zentripetale oder zumindest im Wesentlichen zentripetale Strömung des Kühlmediums ausgebildet wird und im Weiteren das Kühlmedium und die darin befindlichen Granulatkörner einem Auslass (11) der Schneidkammer (7) zugeführt werden,
wobei die Zuströmdüsenanordnung (9) als ringförmige Schlitzdüse ausgebildet ist, welche in ihrer Schlitzbreite verstellbar ist, **dadurch gekennzeichnet, dass** zumindest die Schlitzdüse (9) und/oder die Zuströmkammer (8) mit einem wärmeisolierenden und/oder anti-haftenden Material ausgekleidet ist sind, bevorzugt aus Teflon® oder Emaille.

## Claims

1. Device for producing pellets from a melt material, having a perforated plate (2) with nozzles (1) located therein from which the melt material emerges, wherein located opposite the perforated plate (2) is a motor-driven cutter arrangement having a cutter head with at least one blade (3), and a cutter shaft (5), so that the at least one blade (3) passes over the nozzles (1) in the perforated plate (2) in a rotating manner and in so doing cuts pellets of the melt material emerging there, wherein the device has a cutting chamber (7) in a housing (6, 6a, 6b), which chamber adjoins the perforated plate (2) and encloses at least the at least one blade (3) of the cutter arrangement, and through which chamber flows a coolant that is introduced into the cutting chamber (7) from an inlet apparatus (8,9) so that in the process the pellets of the melt material are solidified in the coolant, wherein the inlet apparatus has a separate inlet chamber (8) that circumferentially encloses the cutting chamber (7) in the area of rotation of the at least one blade (3), and has an inlet nozzle arrangement (9) located circumferentially around the cutting chamber (7) between the inlet chamber (8) and the cutting chamber (7), so that the coolant can be introduced there into the cutting chamber (7) circumferentially from different sides radially inward from the outside, or essentially radially inward from the outside, wherein a centripetal or at least substantially centripetal flow of the coolant is produced at least in the area of rotation, and subsequently the coolant and the pellets located therein are conveyed to an outlet (11) of the cutting chamber (7), wherein the inlet nozzle arrangement (9) is implemented as an annular slot nozzle with an adjustable slot width,
**characterized in that**
at least the slot nozzle (9) and/or the inlet chamber (8) is/are lined with a thermally insulating and/or nonstick material, preferably consisting of Teflon® or vitreous enamel.

## Revendications

1. Dispositif pour la fabrication de granulés à partir d'une masse fondue comportant une plaque perforée (2) présentant des orifices agencés dedans (1) par lesquelles la masse fondue est extrudée, un dispositif de coupe avec une tête de coupe dotée d'au moins une lame (3) et d'un porte-lame (5), entraîné par un moteur faisant face à la plaque perforée (2), de sorte que cette au moins une lame (3) effleure en rotation les orifices (1) de la plaque perforée (2) et ce faisant sépare les granulés de la masse fondue extrudée, le dispositif présentant une chambre de coupe (7) dans un boîtier (6,6a,6b) qui est adjacente à la plaque perforée (2) et enserrant au moins la au moins une lame (3) du dispositif de coupe et est traversée par un fluide réfrigérant qui, sortant d'un dispositif d'alimentation (8,9) est dirigé vers la chambre de coupe (7), de sorte que les granulés provenant de la masse fondue se solidifient dans le fluide réfrigérant, le dispositif d'alimentation comportant une chambre d'alimentation (8) entourant circonférentiellement la chambre de coupe (7) dans la zone de rotation de la au moins une lame (3) et comportant un agencement d'orifices d'alimentation (9) agencés circonférentiellement autour de la chambre de coupe (7) entre la chambre d'alimentation (8) et la chambre de coupe (7) de sorte que le fluide réfrigérant peut être dirigé circonférentiellement venant de tous les côtés radialement de l'extérieur vers l'intérieur ou sensiblement radialement de l'extérieur vers l'intérieur, un écoulement centripète ou au moins sensiblement centripète étant formé au moins dans la zone de rotation et ensuite le fluide réfrigérant et les granulés qui s'y trouvent étant amenés à une sortie (11) de la chambre de coupe (7), l'agencement d'orifices (9) étant configuré comme une buse à fente circulaire dont la largeur de fente est réglable
**caractérisé en ce que**
au moins la buse à fente (9) et/ou la chambre d'alimentation (8) sont revêtues d'un matériau thermo-isolant et/ou antiadhésif, de préférence en Teflon ® ou émaille.
